# EUROPÄISCHE PATENTSCHRIFT

(11) **EP 1 008 233 B1**
(45) Veröffentlichungstag und Bekanntmachung des Hinweises auf die Patenterteilung: **27.10.2004**
(21) Anmeldenummer: 96946224.1
(22) Anmeldetag: 20.12.1996
(51) Int. Cl.: H02P 7/28, E05F 15/10, H02M 3/28

(54) **STROMSPEISEEINRICHTUNG FÜR EIN GLEICHSTROMMOTORANTRIEBSAGGREGAT, INSBESONDERE MIT ERFASSUNG WEGSTRECKEN-ABHÄNGIGER PARAMETER DES ANGETRIEBENEN GEGENSTANDES**
CURRENT SUPPLY DEVICE FOR A D.C. MOTOR DRIVE SYSTEM, ESPECIALLY COMPRISING TRAVEL-DEPENDENT DETECTION OF PARAMETERS OF THE DRIVEN OBJECT
SYSTEME D'ALIMENTATION EN COURANT POUR ENSEMBLE D'ENTRAINEMENT A MOTEUR A COURANT CONTINU, ASSURANT UNE FONCTION DE DETECTION DE PARAMETRES DE L'OBJET ENTRAINE QUI DEPENDENT DE LA DISTANCE PARCOURUE

(30) Priorität: 21.12.1995 DE 19547965
(43) Veröffentlichungstag der Anmeldung: 14.06.2000
(73) Patentinhaber: Hörmann KG Antriebstechnik, 33790 Halle i. Westfalen (DE)
(72) Erfinder: HÖRMANN, Thomas, J., D-66606 St. Wendel (DE)
(74) Vertreter: Kastel, Stefan Dipl.-Phys.
(86) Internationale Anmeldenummer: PCT/DE1996/002492
(87) Internationale Veröffentlichungsnummer: WO 1997/023946

(56) Entgegenhaltungen:
- EP-A- 0 748 915
- DE-A- 3 726 123
- DE-A- 4 200 092
- DE-A- 4 331 781
- US-A- 4 994 724
- ELEKTRONIK, Bd. 43, Nr. 15, 26.Juli 1994, Seiten 64-67, XP000438484 HESS J: "FERRIT-INDUKTIVITATEN IN GETAKTETEN STROMVERSORGUNGEN. TEIL I 1. DER SPERRWANDLER - GRUNDLAGEN UND DIMENSIONIERUNGSHINWEISE"
- ELEKTRONIK, Bd. 33, Nr. 25, Dezember 1984, MUNCHEN DE, Seiten 71-72, XP002029304 M. BIRK: "Unkonventionelle Drehzahlmessung und -regelung bei Gleichstrommotoren"

## Beschreibung

Die Erfindung betrifft eine Stromspeise- und selbsttätige Steuereinrichtung eines elektrischen Gleichstrommotor-Antriebsaggregates gemäß dem Oberbegriff des Anspruchs 1.

Stromspeiseeinrichtungen für Gleichstrommotoren arbeiten herkömmlich mit einem sogenannten Netztransformator, der die Wechselspannung des elektrischen Versorgungsnetzes, in unseren Breiten regelmäßig ca. 220 Volt, in eine wesentlich geringere Spannung transformiert, die gleichgerichtet und mehr oder weniger geglättet dem Gleichstrommotor zugeführt wird. Gleichstrommotoren der für diese Anwendungen gebräuchlichen Art arbeiten mit einer Rotorwicklung, die angeschlossen über einen Kommutator von an diesem entlang gleitenden Bürsten gespeist wird. Das Statorfeld kann gleichstromgespeist oder aber durch Permanentmagnete gebildet sein. Ein solcher Netztransformator ist verhältnismäßig voluminös und vor allem hinsichtlich seines Leerlaufsstrombedarfs aufwendig, wenn man unterstellt, daß die Summe der Betriebszeiten im Verhältnis zur Gesamtzeit der Bereitstellung verhältnismäßig gering ist, wie dies beispielsweise bei Antrieben für Tore, Türen und dergleichen Gebäude- und Geländeabschlüssen der Fall ist. Von Vorteil ist, daß die Netzseite - hohe Spannung - von der Niedrigspannungsseite galvanisch getrennt ist, so daß die Gefahr des Übergriffes der hohen Netzspannung auf die niederspannungsseitig angeschlossenen Gerätschaften, die vielfach von Hand zugänglich und hinsichtlich ihrer Isolationseigenschaften auf die niedrige Gleichspannung ausgelegt sind, ausgeschaltet ist.

Es besteht darüberhinaus häufig der Wunsch oder die Notwendigkeit, die Ausgangsspannung bzw. Speisespannung des Motors steuern und regeln zu können, um die Betriebsbedingungen des Motors, hier die Drehzahl der Abtriebswelle und damit die Geschwindigkeit der nachgeschalteten angetriebenen Gegenstände, insbesondere Tore, Türen, etc., in Abhängigkeit von der Wegstrecke zwischen Stillstand und Nenndrehzahl zu bestimmen und/oder zu variieren, beispielsweise mit gegenüber der normalen Betriebsgeschwindigkeit verringerter Geschwindigkeit in die Endstellungen einlaufen zu lassen. Dazu sind herkömmlich eigenständige bauliche Aufwendungen außerhalb der Spannungstransformation erforderlich.

Der Erfindung liegt die Aufgabe zugrunde, eine Stromspeise- und Steuereinrichtung der eingangs genannten Art zur Verfügung zu stellen, die bei vergleichbar kleinerer Bauweise energetisch sparsamer und für Steuerungen in Abhängigkeit von der Wegstrecke unter hoher Auflösung besonders geeignet ist.

Diese Aufgabe wird erfindungsgemäß durch die Merkmale des Anspruchs 1 gelöst.

Es wird somit eine Gleichrichtung der - verhältnismäßig hohen - Netzspannung unmittelbar und ohne Zwischenschaltung eines herkömmlichen Transformators vorgenommen und die gewonnene Gleichspannung impulsweise der Eingangswicklung eines Übertrages zugeführt, dessen hinsichtlich der Spannung untersetzte Ausgangswicklung in den Speisestromkreis des Gleichstrommotors eingeschaltet ist, so daß die mit hoher Spannung anliegenden Impulsfolgen sich auf die Ausgangsseite übertragen und dort eine in der Spannung (oder "Spannungs"-Impulsreihen) niedrige Impulsreihe bilden, die gleichgerichtet und mittels eines Kondensators in an sich bekannter Weise geglättet wird.

Im Zuge eines Eingangsimpulses baut sich im Kern des Übertragers ein Magnetfeld auf, das zu dessen Ende zusammenbricht und damit in den Wicklungen entsprechend hohe Spannungen hervorruft. Dieser Trägheitseffekt führt dazu, daß soweit möglich der Strom des Impulses aufrechterhalten wird, bis er entsprechend abklingt. Die Schaltvorrichtung wird demnach in ihrer Sperrstellung nach Ende des Impulses stark belastet, weshalb in bevorzugter Ausführung der Eingangswicklung eine Schutzschaltung parallel geschaltet ist, die die Aufgabe hat, die hohe Beanspruchung der gesperrten Schaltvorrichtung abzubauen, zum anderen aber einen Kurzschluß der Primärwicklung zu verhindern. Eine solche Schutzschaltung kann auf verschiedene Weise verwirklicht werden, im vorliegenden Ausführungsbeispiel werden eine Diode und eine Zenerdiode gegengeschaltet, welche Zenerdiode eine Sperrspannung - hier etwa 200 Volt bei 220 Volt Netznennspannung - aufweist. Man erreicht somit eine Art Verschleifung der Impulse, was zur Glättung der sekundären Spannungsimpulse beiträgt.

Es ist bereits bekannt - DE 36 18 221 C1-, einen Gleichstrommotor mit Hilfe einer an ein Wechseltrom-Versorgungsnetz angeschlossenen Gleichrichterschaltung zu speisen, an deren Gleichstromausgang die Primärwicklung eines Übertragers mit Hilfe einer getakteten Schaltvorrichtung impulsweise angeschlossen ist, so daß an der Sekundärwicklung die Speisespannung für den Motor auftritt. Mit einer solchen Schaltungsanordnung kann die Verlustleistung zumindest gering gehalten und eine galvanische Trennung zwischen Hoch- und Niederspannung erreicht werden.

Eine "energiegetreue" Übertragung erhält man, wenn die eingegebene über die Impulsflächen integrierte Leistung ausgangsseitig wieder auftritt. Das bedeutet, daß das Kernmaterial des Übertragers nicht über seine Sättigung hinaus beansprucht werden darf. Heutige Kernmaterialien ermöglichen dies und lassen darüberhinaus hohe Änderungsgeschwindigkeiten des Magnetfeldes bei entsprechend geringen Verlusten zu. Damit kann die Eingangsspule mit Impulsen hoher Taktfrequenz, hier als bevorzugtes Beispiel 100 kHz gespeist werden. Diese Taktfrequenz ist in bevorzugter Ausführung konstant, und die Bestimmung der Ausgangsspannung - geglättet - kann durch Dauer der einzelnen Eingangsimpulse bestimmt werden. Eine solche Impulsweitenmodulation ermöglicht eine Regelung der zugeführten Impulse durch Abtasten der Ausgangsspannung und/oder die Vorgabe einer Grenzspannung, in deren Abhängigkeit die Abtriebsdrehzahl des Motors bestimmt ist. Insbesondere für einen solchen Regel- und/oder Steuervorgang ist es erforderlich, möglichst im proportionalen Arbeitsbereich der Magnetisierung des Kerns in Abhängigkeit von der Wicklungsaussteuerung zu bleiben.

Der erfindungsgemäß vorgesehene, getaktet ausgesteuerte Übertrager schafft eine galvanische Trennung zwischen Netz und Motorspeisekreis, so daß die auf die ausgangsseitige niedrige Gleichspannung ausgelegte Motorisolation sicherheitstechnischen Kriterien genügt. Die vorerwähnte Regelung der eingangsseitigen Impulsweiten in Abhängigkeit von der Ausgangsspannung und/oder der Vorgabe bestimmter Grenzspannungen mit Wirkung auf eine bestimmte Abtriebsdrehzahl des Motors erfolgt über eine Regelkopplung, die ebenfalls eine galvanische Trennung hin zum Netzspannung führenden Bereich des Netzteiles schafft, insbesondere in Gestalt eines Optokopplers.

Es ist in der Regel erforderlich, den motorisch angetriebenen Gegenstand hinsichtlich seines Bewegungsablaufes zu überwachen und vor allem das Einlaufen in die Bewegungsstreckenendstellungen anzuzeigen. Zu diesem Zwecke wird die Bewegungsstrecke proportional durch eine Impulsfolge wiedergegeben, welche von der Drehbewegung einer Welle des Antriebsaggregates abgeleitet ist und die einer Zähleinrichtung in einer Auswerteschaltung zugeführt wird, deren Zählstände mit Speicherwerten für vorbestimmte bzw. zuvor eingegebene Stellungen des Gegenstandes verglichen werden und bei Koinzidenz zu Steuersignalen für das Antriebsaggregat ausgewertet sind. Dies wird anhand von Torblättem oder dergleichen bewegter Gegenstand als Beispiele aus dem Stand der Technik - beispielsweise DE 82 22 087 U1 - nachstehend erläutert:

Unter den hier angesprochenen Toren oder dergleichen sollen neben eigentlichen Toren aller Art als Gebäude- oder Geländeabschluß auch Türen, Fenster, Rolladen, Markisen und so weiter verstanden werden, die einer motorischen Betätigung zugänglich sind.

Zur Vermeidung von in den Endlagen der Bewegungsstrecke des Torblattes angebrachten Endschaltern hat man bereits die Bewegungsstrecke durch eine Impulsfolge nachgebildet mit dem Erfolg, daß die Steuerung des Antriebes für die Abschaltung der Torblattbewegung in den Endstellungen durch Zählen der bewegungsstreckenabhängigen Impulsfolge und Vergleich mit die Endstellungen markierenden Speicherwerten auf kleinstem Raume untergebracht werden kann, beispielsweise in demselben Gehäuse wie der Antriebsmotor. Die Speicherwerte können dabei nach Installation des Tores durch Verfahren des Torblattes mittels Handsteuerung bzw. niedriger Antriebsgeschwindigkeit - Schleichgang - unter einzelnen der dabei abgegebenen Impulsfolge den tatsächlichen Gegebenheiten entsprechend festgelegt werden.

Aufgrund der - spielfreien oder doch zumindest annähernd spielfreien - getrieblichen Verbindung zwischen Torblatt und Abtriebswelle des Antriebsaggregates ist die Zahl der Umdrehungen dieser und anderer Wellen des Antriebsaggregates eine entsprechend genaue Wiedergabe der Bewegungsstrecke des Torblattes. Daher wird die der Bewegungsstrecke entsprechende Impulsfolge oder Impulszahl durch einen Wandler erzeugt, der an einer der Wellen des Antriebsaggregates angeordnet ist. Dabei kann es sich um eine radial geschlitzte Scheibe handeln, auf deren Schlitzanordnung eine Lichtschranke ausgerichtet ist, so daß die umlaufende Scheibe im Abstand der Schlitze am Ausgang der Lichtschranke Impulse erzeugt, oder es kann eine Magnetinduktionseinrichtung vorgesehen sein, bei der ein Dauermagnet mit einer Welle des Antriebes umläuft und in einer ortsfesten Spule Induktionsströme erzeugt. Diese bekannten Ausführungen sind wegen der besonderen Bauteile hinsichtlich des Platzbedarfes, der Anfälligkeit gegen Verschmutzung etc. verhältnismäßig aufwendig. Auch ist die Auflösung, d.h. die Zahl der Impulse pro Streckenabschnitt beispielsweise einer Wellenumdrehung, eher gering, was der Genauigkeit des Einfahrens in die jeweilige Endstellung abträglich ist.

Im folgenden wird der Stromspeiseeinrichtung eine besondere Art der bewegungsstreckenabhängigen Impulsfolgegewinnung zugeordnet, die wesentlich einfacher, raumsparender und betriebssicherer ausgestaltet ist und eine hohe Auflösung der Bewegungsstrecke gewährleistet. Dies wird erreicht durch eine Detektoreinrichtung für die Erfassung von Speisestromänderungen des laufenden Gleichstrommotors, die durch dessen Kommutator veranlaßt sind und an deren Ausgang die jeweilig der Bewegungsstrecke proportionale Impulsfolge auftritt.

Es ist ohne weiteres ersichtlich, daß diese Vorgehensweise praktisch keine insbesondere mechanischen Bauelemente benötigt, sondern vorhandene Einrichtungen, nämlich den Kommutator des Rotors des Gleichstrommotors, als Impulsbildner ausnutzt. Die Erzeugung der Impulsreihe geschieht also nur durch elektrotechnische Weiterverarbeitung und damit kleinräumig, verschmutzungsunabhängig und somit wartungsfrei, wobei eine hohe Auflösung, nämlich eine der Segmentzahl des Kommutators entsprechende Anzahl von Impulsen pro Motorwellenumdrehung erreicht wird. Diese Eigenschaften sind von besonderem Wert für den Torblattantrieb, weil dort kleinräumig und möglichst wartungsarm sowie mit möglichst genauem Anfahren der Endlagen gearbeitet werden muß. Dabei ist desweiteren von besonderem Vorteil, daß die Festlegung der den Endstellungen des Torblattes entsprechenden Speicherwerte in einer Speichereinrichtung durch Zählen mit eben der vorgeschilderten Impulsfolge zu Beginn des Torbetriebes und gegebenenfalls in zyklisch korrigierter Weise auch während der nachfolgenden Betriebszeit praktisch ohne weiteren Aufwand möglich ist.

Die mit dem Kommutator bewerkstelligte Stromwendung in den Wicklungsschleifen des Motorläufers macht sich in bekannter Weise als rhythmische Stromänderung im Speisestromkreis des Motorläufers bemerkbar, und zwar regelmäßig in Form eines durch die Kommutatorlamellenübergänge bedingten überlagerten Gleichstroms. Diese Speisestromänderung kann mittels eines Detektors erfaßt werden, wobei berührungslos arbeitende elektromagnetische Detektoren in Frage kommen. In besonders einfacher Weise wird ein Widerstandselement in den Speisestromkreis eingeschaltet, was grundsätzlich in Parallelschaltung zum Bürstenpaar des Kommutators geschehen könnte, vorzugsweise jedoch in Reihenschaltung zu diesem geschieht. Sofern das so gewonnene pulsierende Signal nicht ohne weiteres sicher genug verarbeitbar ist, läßt es sich aufbereiten, beispielsweise derart, daß man nach Ausfiltern oder Aussieben des Gleich stromanteiles eine Verstärkung und eine Impulsformung vornimmt. Die mit einem solchen Antrieb besonders vorteilhaft zu betreibenden Tore sind insbesondere Garagenschwingtore, Deckengliedertore, Rolltore, Schiebetore und dergleichen. Insbesondere solche die aufgrund des Gleichstrommotors und dessen einfacher Drehzahlsteuerung mit gegenüber der Betriebsgeschwindigkeit niedrigerer Geschwindigkeit in eine oder beide Endlagen verfahrbar sind.

Obwohl die vorgeschilderte Streckenerfassungseinrichtung unter Ausnutzung der Stromwendeimpulse des Kommutators des Gleichstrommotors vergleichsweise hoch auflösend ist und damit verhältnismäßig hohe Impulsfrequenzen erreicht, bleibt dennoch ein Frequenzspektrum von etwa 0 bis 1000 Hz (Stillstanderkennung 0 Hz ist wichtig) im Hinblick auf ein herkömmliches Netzgerät, das mit Netzfrequenz arbeitet, in vergleichbaren Frequenzen. In Anwendung auf das eingangs geschilderte Vorgehen zur Gewinnung der Netzspannung ohne Netztransformator, sondern hochfrequent getakteter Impulsfolge zur Speisung des Übertragers, nämlich gemäß Beispiel ca. 100 kHz, ergibt sich ein beträchtlicher Störabstand größer/gleich 10². Würde man ein "normales Netzteil" verwenden, dessen gleichgerichtete Netzspannung eine Brummspannung mit einer Pulsfrequenz von 100 Hz aufweist und damit in Frequenzbereich der Bewegungsstreckenerfassung liegt, wäre eine außerordentlich aufwendige "Überglättung" erforderlich, um die Störgröße in der Quelle vollständig zu entfernen. Bei Einsatz des eingangs geschilderten "gepulsten Netzteil" läßt sich die Störgröße im Meßglied durch einen schaltungstechnisch sehr einfachen Tiefpass entfernen. Aus diesem Grunde ist die Gesamtheit aus gepulstem Netzteil und Bewegungsstreckenerfassung für den vorliegenden Einsatzfall von besonders positiver Bedeutung.

Die Erfindung wird anhand des in der Zeichnung wiedergegebenen Ausführungsbeispieles nachstehend näher erläutert. Es zeigen:
- Figur 1: einen Vertikalschnitt senkrecht zur Fläche der Garagenöffnung mit schematischer Wiedergabe eines Tores und dessen Antriebsaggre gat;
- Figur 2: eine schematische Schaltskizze für die getaktet betriebene Stromspeiseeinrichtung und für die Ableitung und Aufbereitung einer durch Kommutatordrehung erzeugten, wegstreckenabhängigen Impulsfolge sowie deren Verknüpfung.

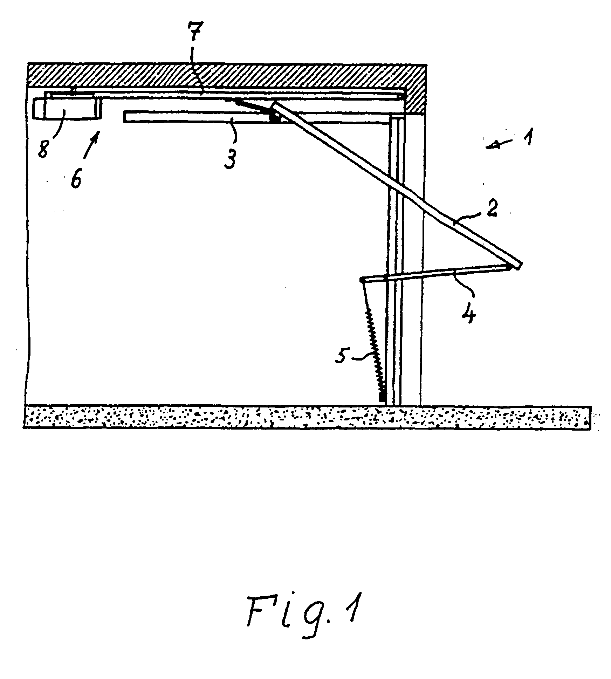

Figur 1 zeigt ein insgesamt mit 1 bezeichnetes Garagentor in schematischer Halboffen-Stellung im Bereich einer Garageneinfahrt, dessen über Kopf bewegbares Torblatt (2) - Schwingtorblatt - mittels im Bereich der oberen Innenkante gelagerten Rollen in horizontalen Führungsschienen und im übrigen durch ein Lenkgestänge 4 in bekannter Weise geführt ist und an dem eine Gewichtsausgleichsfeder 5 angreift. Die horizontale Führungsschiene 3, der Lenker 4 und die Feder 5 sind nur hinsichtlich eines Seitenbereiches des Tores dargestellt und in gleicher Weise für die andere Torseite vorgesehen.

In Deckenbereich der Garage ist in bekannter Weise ein insgesamt mit 6 bezeichnetes Antriebsaggregat ortsfest angeordnet, das eine Schlittenführungsschiene 7, die sich parallel zu den horizontalen Führungsschienen 3 erstreckt, und ein Antriebsgehäuse 8 aufweist. In der Schlittenführungsschiene 7 ist ein Schlitten längsverschiebbar geführt, der einerseits an einer in der Schiene als Endloskette oder Endlosband ausgebildeten Verschiebeeinrichtung befestigt ist und andererseits über ein Lenkgestänge mit dem Torblatt in Verbindung steht. Die Transporteinrichtung wird von der Antriebswelle eines Gleichstrommotors mit anschließendem Getriebe derart hin- und hergehend bewegt, daß der Schlitten in der Schlittenführungsschiene zwischen zwei Endstellungen verschiebbar ist, in deren einer das angeschlossene Torblatt in seiner Schließstellung und in deren anderer in seiner Offenstellung ist. Der Gleichstrommotor mit anschließendem Getriebe sowie eine Steuerungseinrichtung für das Verfahren des Torblattes befinden sich im Antriebsgehäuse 8.

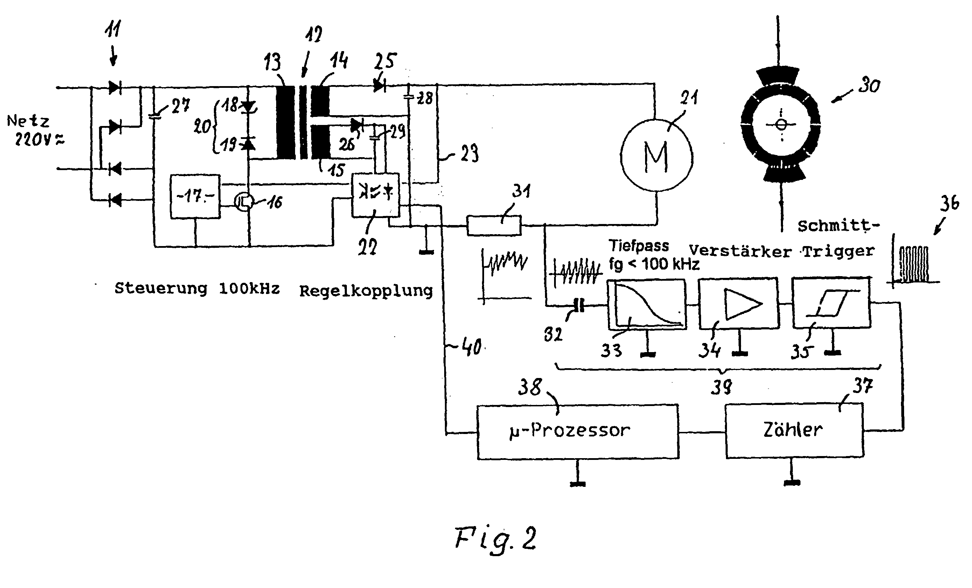

Figur 2 zeigt die schaltungstechnischen Anordnungen und Maßnahmen, die für die Ausführung des gezeigten Beispieles wesentlich sind. Die an den Eingängen links des Schaltbildes anliegende Netzwechselspannung von beispielsweise 220 Volt wird mittels einer bekannten Gleichrichterschaltung - Graetz-Gleichrichter - gleichgerichtet; die Gleichstromausgänge der Schaltung sind von einem Kondensator 27 überbrückt, der in bekannter Weise der Glättung der pulsierend anfallenden Gleichspannung dient. Die gleichgerichtete Spannung (mit Amplitudenspannungswert) wird der Reihenschaltung der Eingangswicklung 13 eines Übertragers 12 und eines schnellen Schalttransistors 16 zugeführt, der mittels einer Steuerschaltung 17 mit einer Frequenz von 100 kHz impulsweise durchgeschaltet wird, so daß die Eingangswicklung 13 mit eben dieser Impulsfrequenz beaufschlagt wird. Der Übertrager 12 ist mit einem (Ring-) Kern magnetischen Materials hoher Sättigungsgrenze und schneller Feldänderungsmöglichkeit ausgestattet, wie dies von moderneren Magnetmaterialien her bekannt ist. Darüberhinaus ist dieser Übertrager 12 im Gegensatz zu einem Netztransformator wesentlich kleinvolumiger, er kommt bei einer Transformation von 230 Volt auf 24 Volt bei einer Leistung von 150 VA mit Abmessungen beispielsweise in der Größenordnung von 30 x 27 x 20 mm aus.

Der Übertrager ist mit einer Ausgangswicklung 14 und einer Hilfswicklung 15 ausgestattet, welch letztere hinsichtlich Spannung und Leistung wesentlich geringer bemessen ist als die Ausgangswicklung 14. Parallel zur Eingangswicklung 13 ist eine Schutzschaltung 20 aus der entgegengesetzt gerichteten Serienschaltung eine Zenerdiode 18 und einer Diode 19 angeordnet, die nach Laden der Eingangswicklung mit einem Impuls bei dessen Ende eine durch das zusammenbrechende Kernmagnetfeld ausgelöste hohe Spannung in der Eingangswicklung in Ladestromrichtung wirksam werden läßt, so daß eine Verschleifung des Impulses stattfindet, die von der Anfangsflanke des Impulses verzögert in Richtung einer abklingenden Aufrechterhaltung eines Stromes nach Auftreten der Endflanke des Impulses auftritt. Die als Supressordiode ausgestaltete, schnell schaltende Zenerdiode 18 hat eine Sperrspannung von etwa 200 Volt, so daß nur entsprechend hohe Spannungen übergreifen und ansonsten ein Kurzschluß der Eingangswicklung vermieden wird, der eine Leistungsentnahme ausgangsseitig verhindern würde.

An die Ausgangswicklung 14 ist in Reihe über einen Gleichrichter 25 der zu speisende Gleichstrommotor 21 angeschlossen, dessen Speisung - rechts daneben angedeutet - über eine Bürsten-Kollektor-Anordnung 30 erfolgt. Parallel zur Sekundärwicklung ist auf den Gleichrichter 25 ein Kondensator hoher Kapazität geschaltet, ein solcher Elektrolyt-Kondensator vorzugsweise, dessen Ladungsänderung sehr schnell von statten geht.

Das vorbeschriebene Netzteil ist geregelt betrieben, d.h. die ausgangsseitig auftretende Spannung wird abgetastet - Leitung 23 - und als rückgeführte Größe zur Beeinflussung der Steuerschaltung 17 in dem Sinne genutzt, daß die Impulsweite der getakteten Impulse an der Eingangswicklung verringert wird, wenn die Ausgangsspannung einen vorbestimmten Wert erreicht, so daß dieser aufrechterhalten wird. Damit läuft der Motor mit entsprechender Abtriebsdrehzahl um. Die zu diesem Zwecke vorgesehene Regelkopplung in Ausbildung als Optokoppler 22 arbeitet ausgangsseitig auf die Steuerschaltung 17, die die Impulsweite der mit konstanter Frequenz getakteten Impulse durch Aussteuerung des Transistors 16 bestimmt. Eingangsseitig ist der Optokoppler 22 mit einem weiteren Eingang versehen, über den unterschiedliche Ausgangsspannungen als Grenzspannungen eingegeben werden können, die jeweils unterschiedliche Abtriebsdrehzahlen des Motors bestimmen.

Grundsätzlich könnte die Regelkopplung in Gestalt des Optokopplers 22 von der Ausgangswicklung 14 mit gespeist werden, doch benutzt man im vorliegenden Beispiel für diese Speisung eine zusätzlich Ausgangswicklung des Übertragers 12 als Hilfswicklung 15, deren Ausgang über eine Diode 26 und einem parallel zur Wicklung liegenden Kondensator 29 dem Optokoppler 22 zugeführt ist, wie dies das Schaltbild gemäß Figur 2 erkennen läßt.

In den Speisestromkreis des Motors 21 ist - hier in Reihe - ein Stromfühler-Widerstand 31 eingeschaltet, zu dem parallel eine Detektoreinrichtung 39 angeordnet ist, die somit die Spannungszustände am Widerstand 31 "abfragt". Damit werden die durch die Stromwendung im Kommutatorbereich bei laufendem Motor auftretenden Impulse der Zahl nach erfaßt, was - wie Figur 2 erkennen läßt - mittels aufeinanderfolgend geschaltet eines Siebgliedes 32 in Form eines Kondensators, eines Tiefpasses 33 als einfache Operationsverstärkerschaltung, hier einer Signalaufbereitung durch einen Verstärker 34 und eines Impulsformers nach Aufbau eines Schmitt-Triggers 35 erfolgt, welche Impulsfolge als Rechteckimpulse 36 in einen Zähler 37 eingegeben und hinsichtlich der jeweils erreichten Werte mit gespeicherten Werten verglichen wird, die unter anderem die Endstellungen des von dem Gleichstrommotor hin und hergehend angetriebenen Gegenstandes, insbesondere Torblattes, angeben, was durch den Prozessor 38 symbolisiert ist. Da die Abtriebsdrehzahl der Motorwelle bzw. dessen Drehbewegung allgemein ein synchrones Abbild der Bewegungsstrecke des angetriebenen Gegenstandes ist, kann man nicht nur die Endstellungen dieser Bewegung, sondern auch beliebige Zwischenstellungen definiert überprüfen, so insbesondere Streckenabschnitte vor den Endstellungen definieren, die eine Herabsetzung der Motordrehzahl für einen sanften Einlauf in die Endstellung des Gegenstandes bewirken. Zu diesem Zwecke ist ein Ausgang des Mikroprozessors 38 über eine Leitung 40 an einen Eingang des Optokopplers 22 angeschlossen, der in Abhängigkeit von den Bewegungsstreckenabschnitten, die abgefragt werden, bestimmte Grenzspannungen für Geschwindigkeiten von 0, langsam, schnell und umgekehrt vorgeben, die die Steuerschaltung 17 entsprechend beeinflussen. Die Regelung nach Maßgabe der Ausgangsspannung über die Leitung 23 erfolgt dann nach Vorgabe der jeweiligen Grenzspannung. Die den Grenzspannungen entsprechenden Speicherwerte werden regelmäßig durch Einrichtungs-Bewegungsabläufe festgelegt, beispielsweise durch Steuerung der Bewegung des Gegenstandes von Hand und Markierung entsprechend erreichter Zählstellen in einem Speicher des Prozessors, welche Speicherstellen während des Betriebes mit den erreichten Zählwerten der dann jeweils tatsächlichen Bewegungsabläufe verglichen und zur Ableitung von Signalen über den Optokoppler an die Schaltvorrichtung zur Aussteuerung der Eingangswicklung ausgewertet werden.

## Patentansprüche

1. Stromspeise- und selbsttätige Steuereinrichtung eines Gleichstrommotor-Antriebsaggregates für die - vornehmlich hin- und hergehende - Antriebsbewegung mit unterschiedlichen Antriebsdrehzahlen und/oder Erfassung zurückgelegter Wegstrecken eines Gegenstandes, vorzugsweise eines Tores, einer Tür und dergleichen Gebäude- oder Gebäudeabschlusses, mit einer an ein Wechselstrom-Versorgungsnetz angeschlossenen Gleichrichterschaltung (11) und einer an deren Gleichstromausgang mittels einer getaktet betriebenen Schaltvorrichtung (16, 17) impulsweise angeschlossenen Eingangswicklung (13) eines spannungsuntersetzenden Übertragers (12), an dessen Ausgangswicklung (14) der zu speisende Gleichstrommotor (21) angeschlossen ist, **gekennzeichnet durch** eine Detektoreinrichtung (39) für die Erfassung von Speisestromänderungen des laufenden Gleichstrommotors (21), die **durch** dessen Kommutator (30) veranlaßt sind, an deren Ausgang die der Wegstrecke proportionale Impulsfolge (36) auftritt, die einer Zähleinrichtung (37) in einer Auswerteschaltung (37, 38) zugeführt ist, deren Zählstände mit Speicherwerten für vorbestimmte bzw. zuvor eingegebene Wegstreckenmarkierungen verglichen werden und bei Koinzidenz Steuersignale erzeugen, die der Schaltvorrichtung (16, 17) zugeleitet (40) sind.

2. Einrichtung nach Anspruch 1,
**dadurch gekennzeichnet**
**daß** parallel zur Eingangswicklung (13) des Übertragers (12) eine Schutzschaltung (20), insbesondere aus einer Zenerdiode (18) und einer Diode (19), vorgesehen ist.

3. Einrichtung nach Anspruch 1 oder 2,
**dadurch gekennzeichnet**
**daß** die Schaltvorrichtung (16, 17) einen Schalter, insbesondere Schalttransistor (16), aufweist, der im Rhythmus einer konstanten Frequenz impulsweise angesteuert ist.

4. Einrichtung nach Anspruch 3,
**dadurch gekennzeichnet**
**daß** die Aussteuerimpulse für den Schalter (16) hinsichtlich ihrer Impulsweite steuerbar sind.

5. Einrichtung nach Anspruch 4,
**dadurch gekennzeichnet**
**daß** die Impulsweitensteuerung in Abhängigkeit von der Spannung an der Ausgangswicklung (14) des Übertragers (12) erfolgt.

6. Einrichtung nach Anspruch 4 oder 5,
**dadurch gekennzeichnet**
**daß** die Impulsweitensteuerung in Abhängigkeit von den Steuersignalen (40) durch Vorgabe von Grenzspannungswerten erfolgt.

7. Einrichtung nach einem der Ansprüche 4 bis 6,
**dadurch gekennzeichnet**
**daß** die Impulsweitensteuerung in Abhängigkeit von der Spannung an der Ausgangswicklung (14) - Spannungsmeßleitung (23) - und/oder der Grenzspannung, - Steuersignalleitung (40) einer Wegmeßeinrichtung (31 - 38) - über eine, vorzugsweise gemeinsame, Regelkopplung, insbesondere in Gestalt eines Optokopplers (22), erfolgt.

8. Einrichtung nach Anspruch 7,
**dadurch gekennzeichnet**
**daß** die Regelkopplung bzw. der Optokoppler (22) von einer sekundärseitigen Hilfswicklung (15) des Übertragers (12) gespeist ist.

9. Einrichtung nach einem der Ansprüche 1 bis 8,
**dadurch gekennzeichnet**
**daß** der Ausgangswicklung (14) des Übertragers (12) und/oder dessen Hilfswicklung (15) jeweils ein Elektrolyt-Kondensator (27; 28; 29) hoher Arbeitsgeschwindigkeit parallel geschaltet ist.

10. Einrichtung nach einem der Ansprüche 1 bis 9,
**dadurch gekennzeichnet,**
**daß** zu der Ausgangswicklung (14) des Übertragers (12) und/oder dessen Hilfswicklung (15) jeweils eine Diode (25; 26) in Reihe geschaltet ist.

11. Einrichtung nach einem der Ansprüche 1 bis 10,
**dadurch gekennzeichnet**
**daß** in den Speisestromkreis des Gleichstrommotors (21) - Bürsten-Kommutator-Speisung - ein Stromfühler-Widerstand (31) eingeschaltet ist, an dem durch den Kommutator (30) veranlaßte Speisestromänderungen entsprechende Signale abgegriffen und der Detektoreinrichtung (39) zugeführt sind.

12. Einrichtung nach Anspruch 11,
**dadurch gekennzeichnet**
**daß** der Stromfühler-Widerstand (31) in Reihe zu dem Kommutator (30) des Gleichstrommotors (21) geschaltet ist.

13. Einrichtung nach einem der Ansprüche 1 bis 12,
**dadurch gekennzeichnet**
**daß** die Detektoreinrichtung (39) ein Siebglied (32), vorzugsweise ausgebildet als Kondensator aufweist.

14. Einrichtung nach einem der Ansprüche 1 bis 13,
**dadurch gekennzeichnet,**
**daß** dem Siebglied (32) ein Tiefpass (33) nachgeschaltet ist, dessen Grenzfrequenz kleiner als die Taktfrequenz der Schaltvorrichtung (16, 17) ist.

15. Einrichtung nach einem der Ansprüche 1 bis 14,
**dadurch gekennzeichnet**
**daß** die Detektoreinrichtung (39) einen Impulsformer, beispielsweise Schmitt-Trigger (35), aufweist.

## Claims

1. Current supplying and automatic control device for a d.c. motor drive unit for - predominantly reciprocating - drive motion at different drive speeds and/or for detecting the distances travelled by an object, preferably a gate, a door or similar building or building closure, having a rectifier circuit (11) connected to an a.c. supply network and an input winding (13) of a voltage stepping down transformer (12), the output winding (14) of which is connected to the a.c. motor (21) which is to be driven, said input winding (13) being connected in pulsed manner to the d.c. output of the rectifier circuit (11) by means of a clocked switching device (16, 17), **characterised by** a detector device (39) for detecting changes in the supply current to the running d.c. motor (21) which are caused by the commutator (30) of said motor, at whose output the pulse sequence (36) proportional to the distance travelled occurs, which is supplied to a counter (37) in an evaluating circuit (37, 38), the counts of which are compared with stored values for predetermined or previously input distance markings and, if they agree, generate control signals which are fed (40) to the switching device (16, 17).

2. Device according to claim 1, **characterised in that** a protective circuit (20), particularly comprising a Zener diode (18) and a diode (19), is provided parallel to the input winding (13) of the transformer (12).

3. Device according to claim 1 or 2, **characterised in that** the switching device (16, 17) comprises a switch, particularly a switching transistor (16), which is actuated in pulsed manner at a constant frequency.

4. Device according to claim 3, **characterised in that** the excitation pulses for the switch (16) are controllable in their pulse width.

5. Device according to claim 4, **characterised in that** the pulse width is controlled as a function of the voltage at the output winding (14) of the transformer (12).

6. Device according to claim 4 or 5, **characterised in that** the pulse width is controlled as a function of the control signals (40) by pre-setting the voltage thresholds.

7. Device according to one of claims 4 to 6, **characterised in that** the pulse width is controlled as a function of the voltage at the output winding (14) - voltage measuring lead (23) - and/or the threshold voltage - control signal lead (40) of a distance measuring device (31-38) - via a preferably shared regulating coupling, particularly in the form of an optocoupler (22).

8. Device according to claim 7, **characterised in that** the regulating coupling or the optocoupler (22) is supplied by an auxiliary winding (15) of the transformer (12) on the secondary side.

9. Device according to one of claims 1 to 8, **characterised in that** in each case an electrolyte capacitor (27; 28; 29) with a high operating speed is connected in parallel to the output winding (14) of the transformer (12) and/or the auxiliary winding (15) thereof.

10. Device according to one of claims 1 to 9, **characterised in that** in each case a diode (25; 26) is connected in series to the output winding (14) of the transformer (12) and/or the auxiliary winding (15) thereof.

11. Device according to one of claims 1 to 10, **characterised in that**, incorporated in the supply circuit of the d.c. motor (21) - brush commutator supply - is a current sensor resistor (31) at which signals corresponding to changes in the supply current caused by the commutator (30) are picked up and fed to the detector device (39).

12. Device according to claim 11, **characterised in that** the current sensor resistor (31) is connected in series to the commutator (30) of the d.c. motor (21).

13. Device according to one of claims 1 to 12, **characterised in that** the detector device (39) has a screening member (32), preferably in the form of a capacitor.

14. Device according to one of claims 1 to 13, **characterised in that** connected downstream of the screening member (32) is a low-pass (33) the threshold frequency of which is less than the clock frequency of the switching device (16, 17).

15. Device according to one of claims 1 to 13, **characterised in that** the detector device (39) comprises a pulse shaper, e.g. a Schmitt trigger (35).

## Revendications

1. Dispositif d'alimentation électrique et de commande automatique d'un organe d'entraînement d'un moteur à courant continu pour déplacer un objet par entraînement - principalement de va-et-vient - selon différents régimes d'entraînement et/ou pour détecter des trajectoires parcourues par un objet, de préférence un portail, une porte et une ouverture de bâtiment similaire, comprenant un circuit redresseur (11) raccordé à un réseau de distribution à courant alternatif et comprenant un enroulement d'entrée (13) d'un transducteur (12) réducteur de tension raccordé par impulsions à sa sortie à courant continue au moyen d'un dispositif de commutation (16, 17) fonctionnant par impulsions, et le moteur à courant continu (21) qui doit être alimenté est raccordé à cet enroulement de sortie (14),
**caractérisé par**
un dispositif de détection (39) pour détecter des variations de courant du moteur à courant continu en marche (21) qui sont occasionnées par ce commutateur (30) et la série d'impulsions (36) proportionnelle à la trajectoire étant générée à la sortie du commutateur et amenée à un dispositif de comptage (37) dans un circuit d'évaluation (37, 38) dont les états de comptage sont comparés à des valeurs enregistrées pour des marquages de trajectoires prédéterminés, respectivement donnés préalablement, et génèrent des signaux de commande par coïncidence qui sont dirigés (40) vers le dispositif de commutation (16, 17).

2. Dispositif selon la revendication 1,
**caractérisé en ce que**
parallèlement à l'enroulement d'entrée (13) du transducteur (12), il est prévu un circuit de protection (20) notamment à partir d'une diode Zener (18) et une diode (19).

3. Dispositif selon la revendication 1 ou 2,
**caractérisé en ce que**
le dispositif de commutation (16, 17) présente un commutateur, notamment un transistor de commutation (16), qui est commandé au rythme d'une fréquence constante.

4. Dispositif selon la revendication 3,
**caractérisé en ce que**
les impulsions de commande en sortie du commutateur (16) peuvent être commandées par rapport à leur largeur d'impulsion.

5. Dispositif selon la revendication 4,
**caractérisé en ce que**
la commande de la largeur d'impulsion s'effectue en fonction de la tension à l'enroulement de sortie (14) du transducteur (12).

6. Dispositif selon la revendication 4 ou 5,
**caractérisé en ce que**
la commande de la largeur d'impulsion s'effectue en fonction des signaux de commande (40) par une prédétermination de valeurs de tension de coupure.

7. Dispositif selon l'une des revendications 4 à 6,
**caractérisé en ce que**
la commande de la largeur d'impulsion s'effectue en fonction de la tension à l'enroulement de sortie (14) -la ligne de mesure de tension (23)-et/ou la tension de coupure, - la ligne de signaux de commande (40) d'un dispositif de mesure de trajectoire (31 - 38) - par un couplage général, de préférence commun, notamment sous la forme d'un photocoupleur (22).

8. Dispositif selon la revendication 7,
**caractérisé en ce que**
le couplage général, respectivement le photocoupleur (22), est alimenté par un enroulement auxiliaire (15) du transducteur (12) situé du côté secondaire.

9. Dispositif selon l'une des revendications 1 à 8,
**caractérisé en ce qu'**
un condensateur d'électrolyte (27, 28, 29) fonctionnant à vitesse élevée est à chaque fois raccordé en parallèle à l'enroulement de sortie (14) du transducteur (12) et/ ou de son enroulement auxiliaire (15).

10. Dispositif selon l'une des revendications 1 à 9,
**caractérisé en ce qu'**
une diode (25, 26) est à chaque fois raccordée en série à l'enroulement de sortie (14) du transducteur (12) et/ou de son enroulement auxiliaire (15).

11. Dispositif selon l'une des revendications 1 à 10,
**caractérisé en ce qu'**
une résistance de capteur électrique (31) est raccordée dans le circuit électrique du moteur à courant continu (21) - commutateur à balai électrique -, des signaux correspondants aux variations électriques occasionnées étant saisis sur la résistance par le commutateur (30) et amenés vers le dispositif de détection (39).

12. Dispositif selon la revendication 11,
**caractérisé en ce que**
la résistance du capteur électrique (31) est raccordée en série au commutateur (30) du moteur à courant continu (21).

13. Dispositif selon l'une des revendications 1 à 12,
**caractérisé en ce que**
le dispositif de détection (39) présente un circuit de filtrage (32), de préférence configuré sous la forme d'un condensateur.

14. Dispositif selon l'une des revendications 1 à 13,
**caractérisé en ce qu'**
un filtre passe-bas (33) est raccordé au circuit de filtrage (32) dont la fréquence de coupure est inférieure à la fréquence d'horloge du dispositif de commutation (16, 17).

15. Dispositif selon l'une des revendications 1 à 14,
**caractérisé en ce que**
le dispositif de détection (39) présente un générateur d'impulsions, par exemple une bascule de Schmitt (35).
